Europäisches Patentamt

European Patent Office

Office européen des brevets

(19)

(11) **EP 1 298 814 B1**

(12) **EUROPEAN PATENT SPECIFICATION**

(45) Date of publication and mention
of the grant of the patent:
**07.12.2005 Bulletin 2005/49**

(51) Int Cl.$^7$: **H04B 1/707**

(21) Application number: **02020407.9**

(22) Date of filing: **10.09.2002**

(54) **CDMA receiver and channel estimation method**

CDMA-Empfänger und Kanalschätzungsverfahren

Récepteur AMRC et Procédé d'estimation de voie

(84) Designated Contracting States:
**DE FR GB**

(30) Priority: **27.09.2001 JP 2001295604**

(43) Date of publication of application:
**02.04.2003 Bulletin 2003/14**

(73) Proprietor: **NEC CORPORATION**
**Tokyo (JP)**

(72) Inventor: **Nishimura, Osami, c/o NEC Corporation**
**Tokyo (JP)**

(74) Representative: **Glawe, Delfs, Moll**
**Patentanwälte**
**Postfach 26 01 62**
**80058 München (DE)**

(56) References cited:
**EP-A- 1 263 179**   **WO-A-00/36760**
**US-B1- 6 192 040**

• **LOHAN E ET AL: "Combined DA/DD/NDA**
**channel estimation techniques for downlink**
**WCDMA" IEEE, vol. 3, 24 September 2000**
**(2000-09-24), pages 1260-1265, XP010524700**

**Description**

The present invention relates to a CDMA (Code Division Multiple Access) receiver and a method for channel estimation therefor, and in particular, to a W-CDMA (Wideband-CDMA) receiver and a method for channel estimation therefor.

One of methods for improving characteristics of receiving a signal in a W-CDMA receiver is improving the precision of channel estimation which is performed in fingers. The channel estimation is estimating the variation of the phase and amplitude of a received signal due to fading in each path, i.e., the complex envelope of fading.

Conventionally, the channel estimation employs a method which uses only pilot bits. However, there is a trend that the channel estimation employs a method which makes a hard decision on the bits of DPCCH (Dedicated Physical Control CHannel) other than the pilot bits after demodulation, and uses the result of the hard decision for the channel estimation. The hard decision will be described hereinafter.

Other related examples are disclosed in JP 2000-78111A (hereinafter, referred to as reference 1), JP 10-51424A (hereinafter, referred to as reference 2), JP 11-68700A (hereinafter, referred to as reference 3), JP 11-154930A (hereinafter, referred to as reference 4) and JP 11-186990A (referred to as reference 5).

The technology disclosed in reference 1 is multiplying weight coefficients to a plurality of pilots, adding the pilots after the multiplication in order to generate a channel estimation value with respect to channel information of a data signal. The technology disclosed in reference 2 is calculating an weighted-average of a plurality of pilot blocks. The technology disclosed in reference 3 is performing channel estimation using pilot bits of a plurality of physical channels. The technology disclosed in reference 4 is calculating an weighted-average of bits of a plurality of pilot channels. The technology disclosed in reference 5 is calculating a weighted-average of a plurality of pilot blocks while varying weight coefficients for every bit.

However, conventional CDMA receivers have a disadvantage that precision of channel estimation is low.

JP 200041010 and WO 00/36760 disclose CDMA receivers according to the preamble of claim 1 and methods for channel estimation according to the preamble of claim 6.

An object of the present invention is to provide a CDMA receiver and method for channel estimation therefor in which precision of the channel estimation is improved as compared with conventional CDMA receivers and characteristics of receiving operation is improved.

According to a first aspect of the present invention, there is provided a CDMA receiver comprising: a plurality of channel estimators each for performing channel estimation; a rake synthesizer connected to the plurality of channel estimators; a transmission power control bit synthesizer connected to the rake synthesizer; and a hard decision circuit connected to the rake synthesizer, the transmission power control bit synthesizer and the plurality of the channel estimators, wherein each of the plurality of channel estimator comprises: a first channel estimator unit for performing a first channel estimation using pilot bits; and a synchronous detector for detecting received bits other than the pilot bits, wherein the rake synthesizer performs rake synthesis on results of the detections by synchronous detectors each of which is provided in the channel estimator, wherein the transmission power control bit synthesizer synthesized transmission power control bits supplied from the rake synthesizer, wherein the hard decision circuit makes a decision on at least a synthesized transmission power control bit, and wherein each of the plurality of channel estimator further comprises: a second channel estimator unit for performing a second channel estimation using a result of the hard decision; and an averaging circuit for averaging a result of the first channel estimation and a result of the second channel estimation.

In the CDMA receiver, the hard decision circuit may make a decision on both the synthesized transmission power control bit and bits other than both the pilot bits and the transmission power control bits.

In the CDMA receiver, the synchronous detector may detect the received bits using a result of the first channel estimation.

According to a second aspect of the present invention, there is provided a CDMA base station comprising the above CDMA receiver.

According to a third aspect of the present invention, there is provided a CDMA mobile terminal comprising the above CDMA receiver.

According to a fourth aspect of the present invention, there is provided a method for channel estimation comprising the steps of: performing a first channel estimation using pilot bits in each finger; performing a synchronous detection on received bits other than the pilot bits in each finger; performing rake synthesis on results of the synchronous detections, each of which have performed in each finger; synthesizing transmission power control bits which have been rake synthesized; making a hard decision on at least a synthesized transmission power control bit; performing a second channel estimation using a result of the hard decision in each finger; and averaging a result of the first channel estimation and a result of the second channel estimation in each finger.

In the method for channel estimation, the hard decision may be made on both the synthesized transmission power control bit and bits other than both the pilot bits and the transmission power control bits.

In the method for channel estimation, the synchronous detection may be performed using a result of the first channel estimation.

These and other objects, features and advantages of the present invention will become more apparent in the light of the following detailed description of the best mode embodiments thereof, as illustrated in the accompanying drawings.

FIG. 1 shows a data format of an up-ling signal in 3GPP;

FIG. 2 shows an example of a CDMA modulator;

FIG. 3 shows an example of a CDMA receiver;

FIG. 4 shows a structure of a channel estimator in a conventional case of using only pilot symbols for channel estimation;

FIG. 5 shows an example of a vector estimator;

FIG. 6 shows a structure of a conventional synchronous detector or demodulator;

FIG. 7 shows a structure of a conventional channel estimator in a case where a hard decision is also used for channel estimation;

FIG. 8 mainly shows a structure of a channel estimator of a W-CDMA receiver according to a preferred embodiment of the present invention;

FIG. 9 shows a structure of a first example of the channel estimator of the W-CDMA receiver according to the preferred embodiment of the present invention;

FIG. 10 is a flow chart showing an operation of the channel estimating portion;

FIG. 11 shows synchronous detection, TPC synthesis and hard decision according to the present invention;

FIG. 12 shows a BLER characteristic curve in a case of the Case 3 propagation condition in 3GPP test channel 12.2kbps model; decision is used for channel estimation;

FIG. 13 shows a structure of a second example of the channel estimator of the W-CDMA receiver according to the preferred embodiment of the present invention;

FIG. 14 shows a structure of a third example of the channel estimator of the W-CDMA receiver according to the preferred embodiment of the present invention; and

FIG. 15 shows the format of a down-link signal in 3GPP.

Firstly, the outline of the present invention will be described. As described above, channel estimation conventionally has been performed using only pilot bits. Alternatively, channel estimation conventionally has been performed using the result of a hard decision after making the hard decision on bits of DPCCH other than the pilot bits which is preceded by demodulation.

That is, the channel estimation using only the pilot bits yields a certain precision. However, if the result of channel estimation using bits of DPCCH other than the pilot bits is added to the result of the channel estimation using only the pilot bits, then the precision of the channel estimation is further improved.

Here, the channel estimation using the pilot bits is obtained by demodulating or despreading the pilot bits with known data. Contrary to this, there is nothing which corresponds to the known data for the channel estimation using the bits of DPCCH data other than the pilot bits. Therefore, it is necessary to newly generate data which corresponds to the known data. Conventionally, the result of the hard decision on the bits of DPCCH other than the pilot bits has been used as the data which corresponds to the known data. That is, the channel estimation using the bits of DPCCH other than the pilot bits has been made by demodulating or despreading the bits in DPCH other than the pilot bits with the resultant data of the hard decision.

On the other hand, according to the present invention, the hard decision is made after transmission power control bits (hereinafter, referred to as TPC bits) are synthesized on the assumption that in a format in which there are two TPC bits, the values of the two TPC bits are identical. That is, to contrary to the conventional technology in which only the hard decision on the bits of DPCCH other than the pilot bits is performed, the process of synthesizing the TPC bits is inserted before the hard decision according to the present invention. Owing to this synthesis, the precision of the channel estimation is further improved.

Here, the synthesis of the TPC bits and the hard decision will be briefly explained. Firstly, the synthesis of the TPC bits will be explained. The TPC bits designate the other party to increase or decrease the transmission power. For example, if all and each of the TPC bits takes a value of "1", then it designates the other party to increase the transmission power, while if all and each of the TPC bits takes a value of "-1", then it designates the other party to decrease the transmission power. In this manner, all and each of the TPC bits takes any one of only the two values of "1" and "-1". On the other hand, on the other party, each of the TPC bits is regarded as data which takes more than two values which depends on the resolution of an analog-to-digital converter. For example, if the analog-to-digital converter has 3 bits of resolution or 8 steps, then each of the TPC bits takes any one of eight values of "-1", "-0.75", "-0.5", "-0.25", "0", "0.25", "0.5" and "0.75". In addition, as explained above, in a format in which there are two TPC bits, the values of the two TPC bits are identical. Therefore, when the designator transmits a TPC bit of a value of "1" twice, the other party receives the TPC bit twice. Here, the former TPC bit may take a value of "-0.25", and the latter TPC bit may take a value of "0.75" on the other party depending on the condition of a transmission line.

If the received value falls between "-1" to "-0.25", then the TPC bit is judged to be "0", while when the received value falls between "0" to "0.75", then the TPC bit is judged to be "1". Therefore, in the above case, the first TPC bit is judged to be "0" and the second TPC bit is judged to be "1". The above case is an example that the other party wrongly judges that the first TPC bit is "1" and the second TPC bit is "0" notwithstanding that the designator transmits the TPC bit of a value of "1" twice.

To solve the above problem, according to the present invention, the other party sums up the two TPC bits, i. e., the first TPC bit of a value of "-0.25" and the second TPC bit of a value of "0.75", and divides the total by a value of two, which yields a value of "0.25" and the judged result of "1". Therefore, the reliability of the judged result is improved according to this calculation.

The above calculation on the TPC bits is referred to as "a synthesis of the TPC bits". It is appreciated that if the channel estimation is performed using a hard decision after the synthesis of the TPC bits, then the precision of the channel estimation is improved.

In addition, the above operation in which if the received value falls between "-1" and "-0.25", then the TPC bit is judged to be "0", while if the received value falls between "0" and "0.75", then the TPC bit is judged to be "1" is referred to as a hard decision.

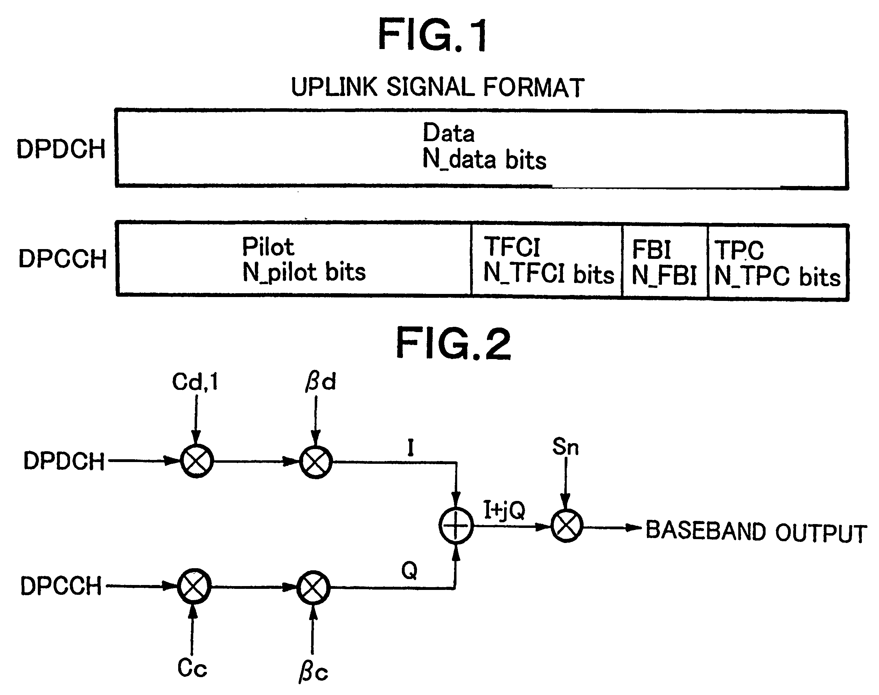

Preferred embodiment according to the present invention will be described with reference to the accompanying drawings. Before describing the preferred embodiment, a conventional technology which is the basis of the present invention will be described. FIG. 1 shows a format of an up-link signal defined in "3GPP (3rd Generation Partnership Project), TS 25.211 V3.6.0 (2001-03), Chapter 5.2.1". Referring to the FIG. 1, data sent to the upper layer are accommodated in DPDCH (Dedicated Physical Data Channel), and the control bits are accommodated in DPCCH. Among the control bits, the pilot bits are used for the above-mentioned channel estimation, and the received data are demodulated on the basis of the channel estimation.

A base station (Node-B) is controlled by an RNC (Radio Network Controller). A lower layer opposed to the upper layer is a physical layer (Layer 1), and the upper layer is a MAC (Media Access Control) layer or an RLC (Radio Link Control) layer (Layer 2) which is mounted on RNC.

In addition, the present invention relates to improvement of the characteristics of reception with respect to the up-link from a mobile terminal to the base station and the down-link. The signal directing from the base station to the mobile terminal is referred to as "a down-link".

FIG. 2 shows a modulator in a transmitter side. The DPDCH signal is spread with a spread code (Cd,1) and adjusted in gain with a gain constant (β d) to be an I (In-phase) signal. On the other hand, the bits of DPCCH are spread with a spread code (Cc) and adjusted in gain with a gain constant (βc) to be a Q (Quadrature) signal. Thereafter, the complex signal of I + jQ is scrambled with a scramble code (Sn) to be a baseband signal.

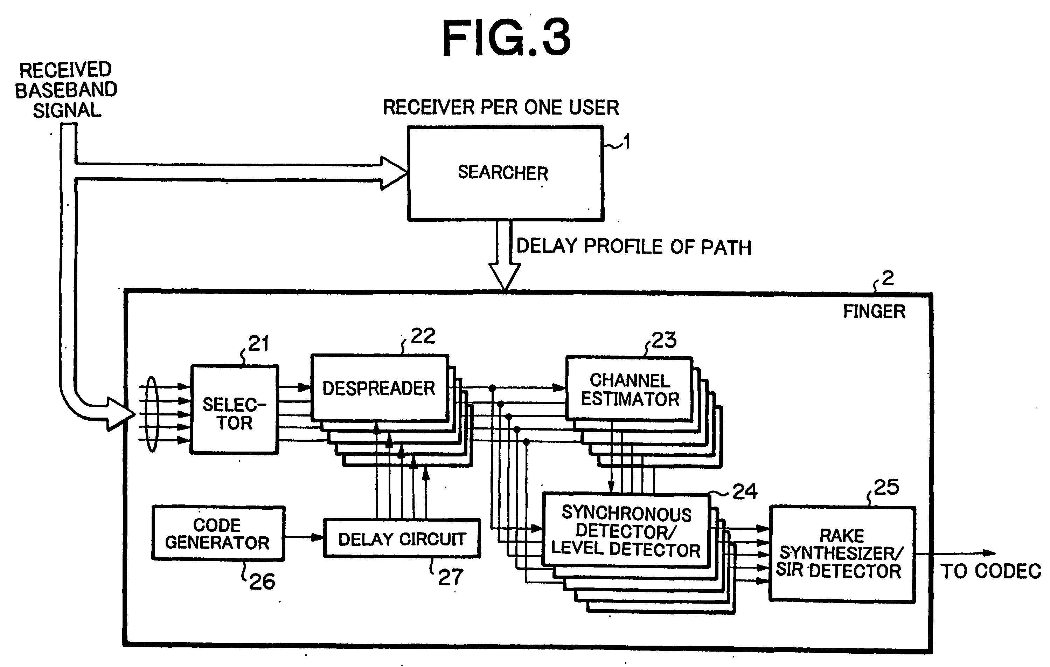

FIG. 3 shows an example of a receiver. Referring to FIG. 3, the receiver comprises a searcher 1 and a finger 2. The finger 2 comprises a selector 21, despreaders 22, channel estimators 23, synchronous detectors 24, a rake synthesizer/SIR (Signal to Interference and noise power Ratio) detector 25, a code generator 26 and a delay circuit 27.

A received baseband signal is supplied to both the searcher 1 which searches for a delay profile and to the finger 2 which performs demodulation. In the finger 2, the received signal is supplied to the selector 21 in which signals of prescribed paths are selected, and the selected signals are despread in the despreaders 22 in accordance with the delay profile supplied from the searcher 1. The channel estimators 23 perform channel estimation on the basis of the despread data. The synchronous detectors 24 perform demodulation on the basis of the channel estimation values and the despread data. The demodulated data are synthesized and used for SIR-detection in rake synthesizer/SIR detector 25 and then supplied to a codec in upper signal processor which is not shown.

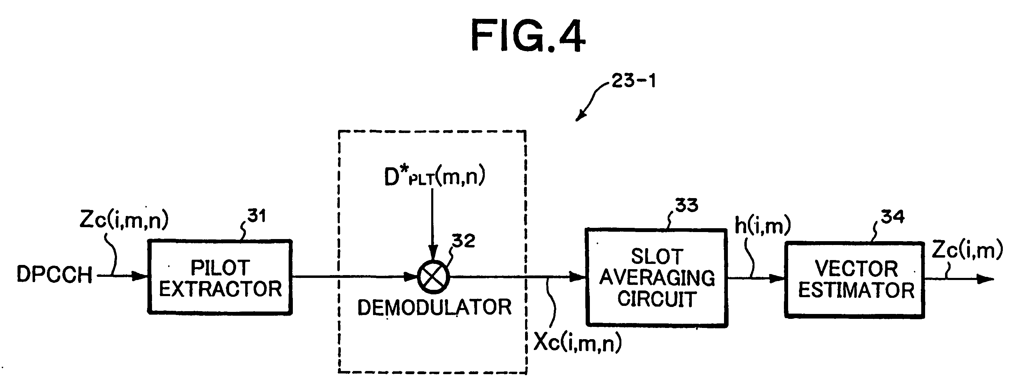

FIG. 4 shows a conventional channel estimator 23-1 as an example of the channel estimator 23. The channel estimator 23-1 only uses the pilot bits. Referring to FIG. 4, the channel estimator 23-1 comprises pilot extractor 31, a multiplier 32, a slot averaging circuit 33 and a vector estimator 34.

In the channel estimator 23-1, the pilot extractor 31 extracts the pilot bits in the DPCCH, and the multiplier 32 demodulates the pilot bits to obtain a demodulated signal $Xc(i, m, n)$ (where i represents the number of a finger, m represents the number of a slot and n represents the number of a bit). The slot averaging circuit 33 vectorially averages the demodulated signal $Xc(i, m, n)$ for every slot to obtain an average signal $h(i, m)$. For a purpose of improving the precision of the estimation, the average signal $h(i, m)$ is filtered in a range of some slots in the vector estimator 34 to obtain a fading vector $Zc(i, m)$ which is also referred to as a channel estimation vector. Here, one slot consists of 10 bits for the DPCCH as explained later.

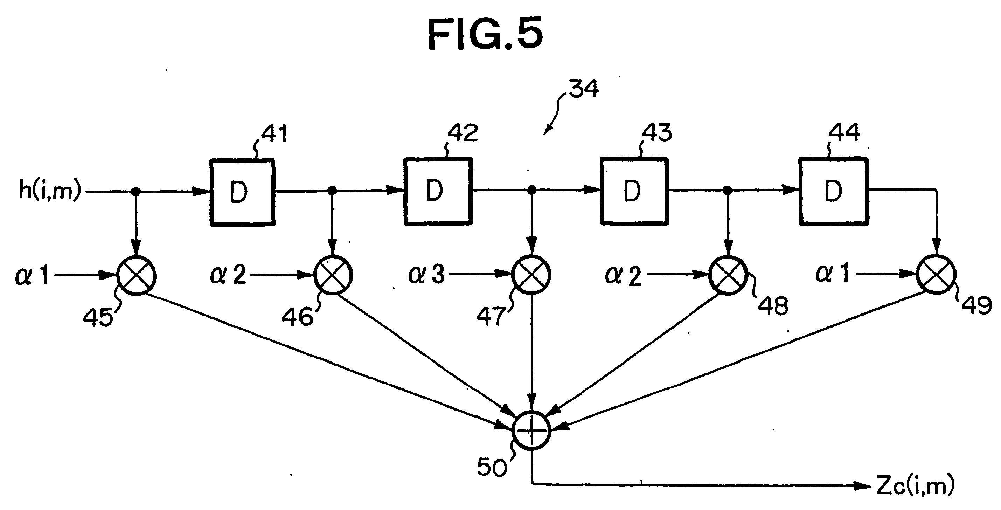

FIG. 5 shows an example of the vector estimator (or fading vector estimator) 34. Referring to FIG. 5, the vector estimator 34 comprises delay circuits 41-44, multipliers 45-49 and an adder 50.

The channel estimation value $h(i, m)$ of the m-th slot in the i-th finger is supplied to the vector estimator 34 which comprises an FIR (Finite Impulse Response) filter, and the fading vector Zc(i, m) is derived from the vector estimator 34. In FIG. 5, the number of taps is five, and therefore, the fading vector Zc(i, m) is delayed from the channel estimation value h(i, m) by two slots.

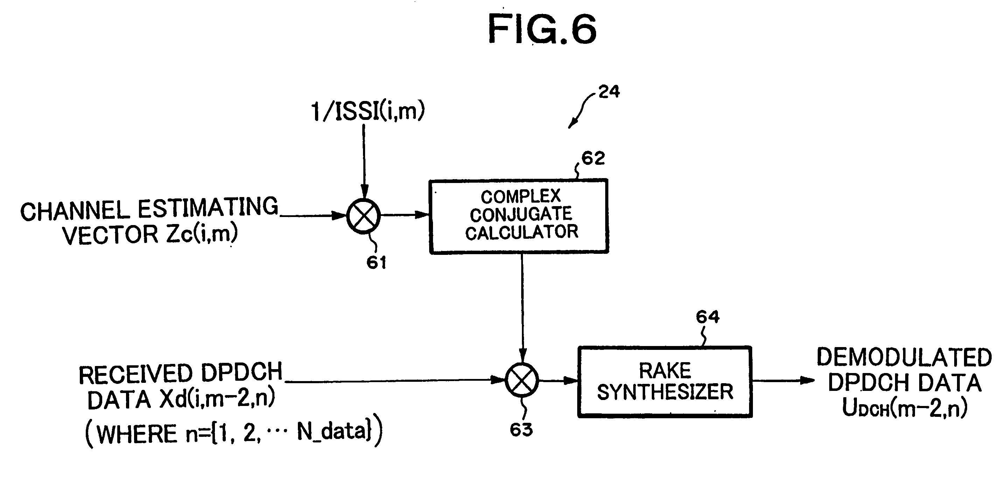

FIG. 6 shows a conventional synchronous detector 24. Referring to FIG. 6, the synchronous detector 24 comprises multipliers 61 and 63, a complex conjugate calculator 62 and a rake synthesizer 64.

Referring to FIG. 6, the multiplier 61 multiplies the fading vector Zc(i, m) with the reciprocal of ISSI (Interference Signal Strength Indicator) supplied from the rake synthesizer/SIR detector 25. The complex conjugate calculator 62 calculates the normalized complex conjugate of the products of the multiplication. The multiplier 61 multiplies the DPDCH signal with the normalized complex conjugate. The rake synthesizer 64 performs rake-synthesis on the products each from the multiplier 63 to obtain a demodulated signal $U_{DCH}$(m-2, n) of the DPDCH which is represented by the equation as follows:

$$U_{DCH}(m-2,n) = \sum_{i=0}^{N_L-1}\left\{ x_d(i,m-2,n)\frac{Z_c^*(i,m)}{ISSI(i,m)} \right\} \qquad (1)$$

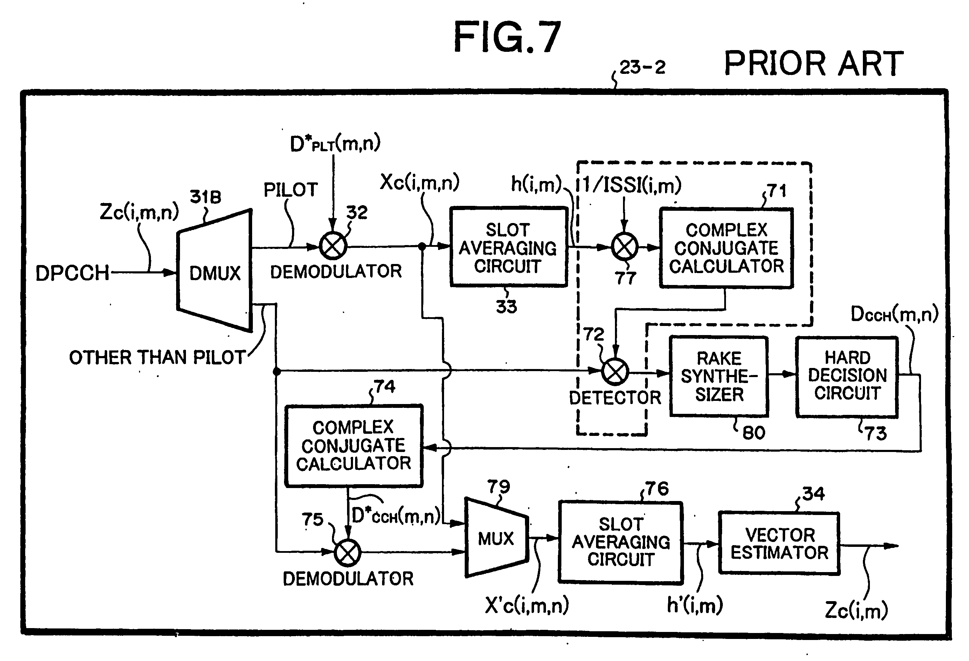

FIG. 7 shows a conventional channel estimator 23-2 as an example of the channel estimator 23. The channel estimator 23-2 uses not only the pilot bits but also a result of the hard decision for the channel estimation. The members in FIG. 7 which are similar to those as shown in FIG. 4 are represented by the same references, and explanation thereof is omitted. Referring to FIG. 7, the channel estimator 23-2 comprises a demultiplexer 31B, the multiplier 32, the slot averaging circuit 33, complex conjugate calculators 71 and 74, multipliers 72, 75 and 77, a rake synthesizer 80, a hard decision circuit 73, a multiplexer 79, a slot averaging circuit 76 and the vector estimator 34. The multipliers 77 and 72, the complex conjugate calculator 71 and the rake synthesizer 80 are similar to the multipliers 61 and 63, the complex conjugate calculator 62 and the rake synthesizer 64 of the synchronous detector 24 as shown in FIG. 6, respectively, and are provided separately from the synchronous detector 24.

Next, the operation of the channel estimator 23-2 will be described. The pilot bits which are extracted by the demultiplexer 31B are demodulated by the multiplier 32 using the known data $D^*_{PLT}$(m, n). The slot averaging circuit 33 averages the demodulated data in the range of a slot to obtain the channel estimation h(i, m). The combination of the multiplier 77, the complex conjugate circuit 71 and the multiplier 72 performs synchronous detection on the received bits other than the pilot bits using the channel estimation h(i, m). The rake synthesizer 80 performs rake synthesis on the data derived from the multiplier 72. The hard decision circuit 73 makes a hard decision on the data derived from the rake synthesizer 80 to obtain data $D_{CCH}$(m, n).

Next, in the second channel estimation, the multiplexer 79 multiplexes the demodulated data Xc(i, m, n) in the portion of the pilot bits which is derived from the multiplier 32 and the data which has been demodulated using the result of the hard decision on the data in the portion of other than the pilot bits, which is derived from the hard decision circuit 73, the complex conjugate circuit 74 and the multiplier 75 to obtain a multiplexed data X'c(i, m, n). The slot averaging circuit 76 averages the multiplexed data X'c(i, m, n) to obtain averaged multiplexed data h'(i, m). The vector estimator 34 smoothes the averaged multiplexed data h'(i, m) to obtain the smoothed data Zc(i, m), which will be used for demodulating the DPDCH data. That is, the output of the vector estimator 34 is supplied to the synchronous detector/ level detector 24.

Here, the demodulated data Xc(i, m, n) is represented by the equation as follows:

$$X_c(i, m, n) = z_c(i, m, m)\cdot D^*_{PLT}(m,n) \qquad (2),$$

wherein $D^*_{PLT}$(m, n) is the data used for the demodulation.
The channel estimation h(i, m) is represented by the equation as follows:

$$h(i,m) = \frac{1}{N_P}\sum_{n=0}^{N_P-1} z_c(i,m,n)\cdot D^*_{PLT}(m,n) \qquad (3).$$

The resultant data of the hard decision $D_{CCH}$(m, n) is represented by the equation as follows:

$$D_{CCH}(m,n) = \quad j \quad if \quad Re\left[\sum_{i=0}^{N_t-1}\left(z_C(i,m,n)\cdot h^*(m,n)\right)\right] \geq 0$$
$$= -j \quad if \quad Re\left[\sum_{i=0}^{N_t-1}\left(z_C(i,m,n)\cdot h^*(m,n)\right)\right] < 0 \qquad (4).$$

The multiplexed data X'c(i, m, n) is represented by the equation as follows:

$$x'_C(i,m,n) = z_C(i,m,n)\cdot D^*_{PLT}(m,n) \quad for \ 0 \leq n < N_P$$
$$= z_C(i,m,n)\cdot D^*_{CCH}(m,n) \ . \ for \ N_P \leq n < 10 \qquad (5).$$

The averaged multiplexed data h'(i, m) is represented by the equation as follows:

$$h'(i,m) = \frac{1}{10}\left(\sum_{n=0}^{N_P-1} z_C(i,m,n)\cdot D^*_{PLT}(m,n) + \sum_{n=N_P}^{9} z_C(i,m,n)\cdot D_{CCH}(m,n)\right) \qquad (6).$$

Next, the W-CDMA receiver according to an embodiment of the present invention will be described hereinafter on the basis of the conventional technology as described above.

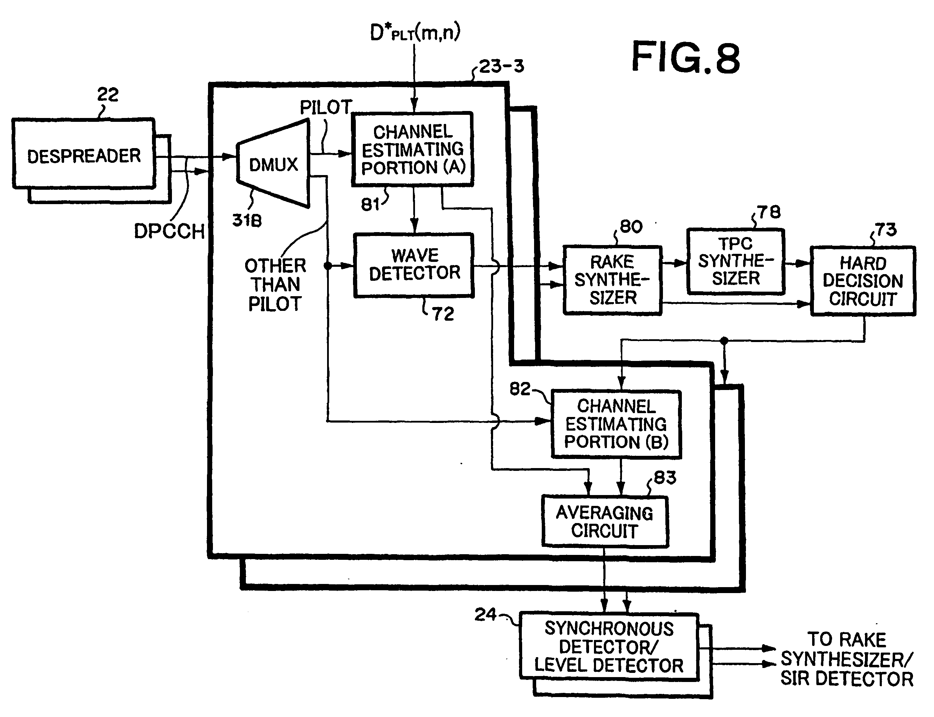

FIG. 8 shows a channel estimator of a W-CDMA receiver according to an embodiment of the present invention. The similar members to those of the conventional technology as shown in FIG. 3 are represented by the same references, and explanation thereof is omitted. Referring to FIG. 8, each channel estimator 23-3 is provided for each finger, and each channel estimator 23-3 comprises a demultiplexer 31B, a channel estimating portion (A) 81, a wave detector 72, a channel estimating portion (B) 82 and an averaging circuit 83. The rake synthesizer 80, a TPC synthesizer 78 and the hard decision circuit 73 are shared among fingers as common members.

Next, the operation of the channel estimator will be described. The bits of the DPCCH supplied from the despreader 22 of the relevant finger is supplied to the demultiplexer 31B, in which the bits of DPCCH are divided into the pilot bits and the bits other than the pilot bits. The channel estimating portion (A) 81 performs channel estimation by only the pilot bits using the known signal $D^*_{PLT}(m, n)$. On the other hand, the bits other than the pilot bits are subjected to synchronous detection by the wave detector 72 using the result of the channel estimation performed by the channel estimating portion (A) 81, and is subjected to rake synthesis performed by the rake synthesizer 80. Thereafter, the TPC bits after the rake synthesis are subjected to the TPC synthesis performed by TPC synthesizer 78. The synthesized TPC bit and the bits other than both the pilot bits and the TPC bits are subjected to a hard decision performed by the hard decision circuit 73. Moreover, the channel estimating portion (B) 82 performs channel estimation on bits other than pilot bits using the result of the hard decision. Next, the averaging circuit 83 calculates the average of the result of the channel estimation by only the pilot bits and the result of the channel estimation by the bits of other than the pilot bits. The average is supplied to each synchronous detector/level detector 24.

[Example]

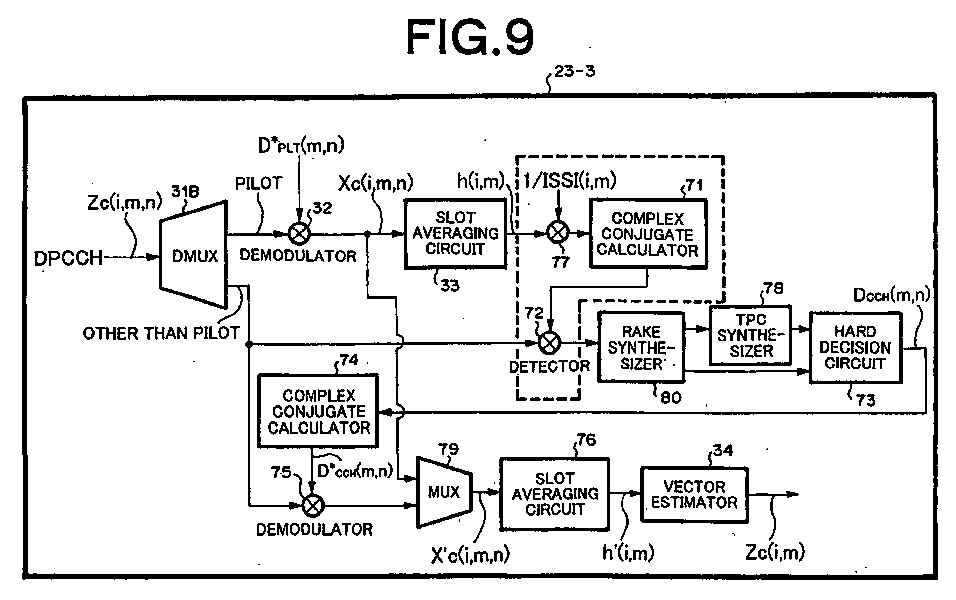

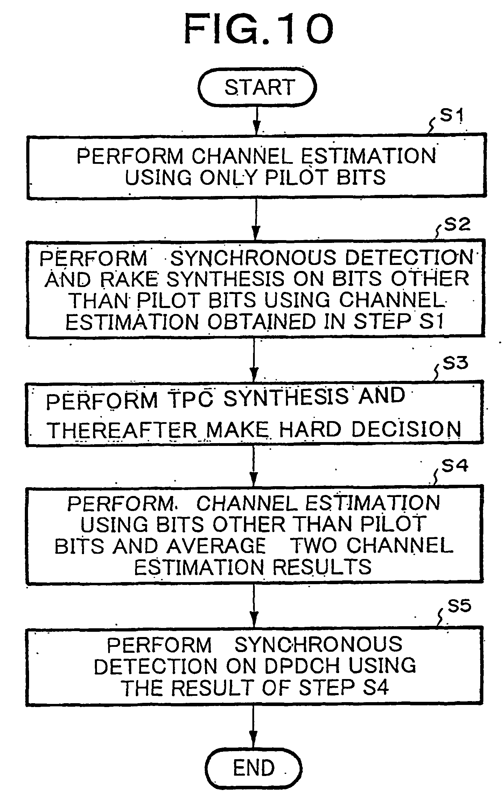

Next, an example of the channel estimator will be explained. FIG. 9 shows an example of the structure of a channel estimator 23-3 of the W-CDMA receiver according to the present invention for a case where DPCCH slot format = 2, for example. FIG. 10 shows a flow chart of the operation of the channel estimator 23-3. In FIG. 9, the similar members to those as shown in FIG. 7 are represented by the same references, and explanation thereof is omitted.

Referring to FIG. 9, the channel estimator 23-3 comprises the demultiplexer 31B, the multiplier 32, the slot averaging circuit 33, the complex conjugate calculators 71 and 74, the multipliers 72, 75 and 77, the rake synthesizer 80, a TPC synthesizer/hard decision circuit 78, the multiplexer 79, the slot averaging circuit 76 and the vector estimator 34.

Next, the operation of the channel estimator 23-3 will be described with reference to FIG. 10. Firstly, at step S1, the channel estimation is performed using only the pilot bits. That is, the pilot bits are extracted by the demultiplexer 31B as shown in FIG. 9, the extracted pilot bits are demodulated using the known data $D^*_{PLT}(m, n)$ to obtain the demodulated signal Xc(i, m, n), the demodulated Xc(i, m, n) are averaged in the range of a slot by the slot averaging circuit 33 to obtain the average signal h(i, m). The demodulator 32 in FIG. 9 corresponds to the channel estimating portion (A) 81 in FIG. 8.

Next, at step S2, the synchronous detection and the rake synthesis are performed on the received bits of other than the pilot bits using the result h(i, m) of the channel estimation obtained at the step S1 That is, the complex conjugate calculator 71, the multipliers 72 and 77 and the rake synthesizer 80 operate in the same way as those of the members as shown in FIG. 6. This synchronous detection compensates the phase of the received bits of other than the pilot bits.

Next, at step S3, the result of the synchronous detection and the rake synthesis is subjected to the TPC synthesis in the TPC synthesizer 78 and the hard decision in the hard decision circuit 78. As a result of the hard decision, data $D_{CCH}(m, n)$ is obtained. The complex conjugate $D^*_{CCH}(m, n)$ of the data $D_{CCH}(m, n)$ is obtained by the complex conjugate calculator 74. This complex conjugate $D^*_{CCH}(m, n)$ corresponds to the known data $D^*_{PLT}(m, n)$ as mentioned above.

Next, at step S4, the received bits of other than the pilot bits are demodulated by the multiplier 75 using the complex conjugate $D^*_{CCH}(m, n)$, and the demodulated data from the multiplier 75 is multiplexed with the result of the demodulated data Xc(i, m, n) from the multiplier 32 by the multiplexer 79. In addition, the multiplexed data are processed by the slot averaging circuit 76 and the vector estimator 34 to obtain the channel estimation Zc(i, m). The demodulator 75 and the multiplexer 79 in FIG. 9 correspond to the channel estimating portion (B) 82 and the averaging circuit 83 in FIG. 8, respectively.

Next, at step S5, the synchronous detection of the data of the DPDCH is performed by the synchronous detector/level detector 24 in FIG. 3 using the channel estimation Zc(i, m) from the vector estimator 34.

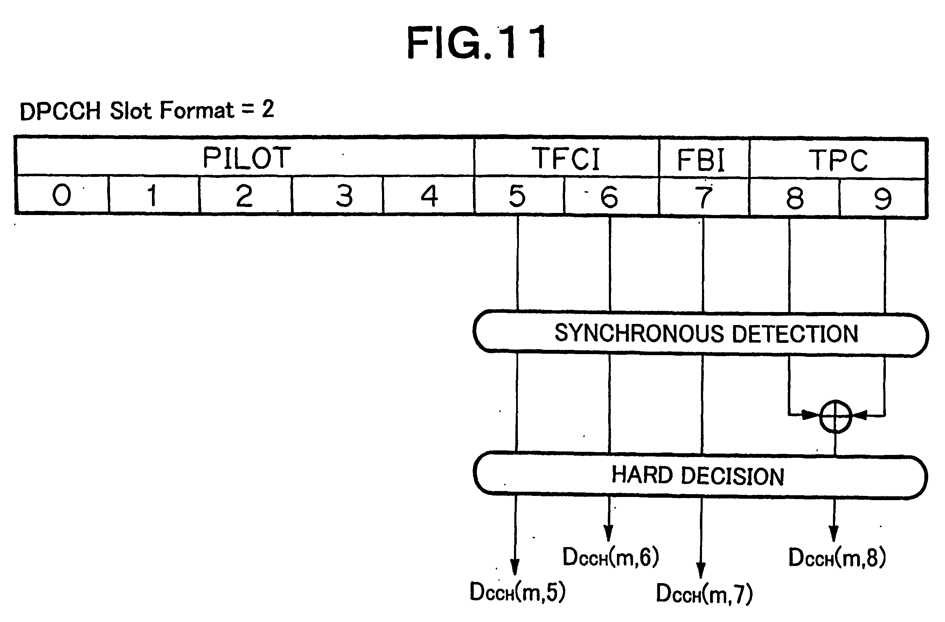

FIG. 11 shows the hard decision using the TPC information according to the present invention. FIG. 11 exemplifies a case where the DPCCH slot format = 2. Referring to FIG. 11, the DPCCH comprises a PILOT which occupies the first to fourth bits, a TFCI (Transport Format Combination Indicator) which occupies the fifth to sixth bits, a FBI (Feedback Indicator) which occupies the seventh bit and the TPC which occupies the eighth to ninth bits. Among these, the bits of the TFCI, FBI and TPC other than the PILOT are subjected to the synchronous detection by the multipliers 72 and 77 and the complex conjugate circuit 71 and to the rake synthesis by the rake synthesizer 80. In addition, the eighth and ninth bits are subjected to the TPC synthesis in TPC synthesizer 78. Thereafter, the TFCI and FBI after the synchronous detection and the TPC after both the synchronous detection and the TPC synthesis are subjected to the hard decision in the hard decision circuit 73.

The hard decision circuit in FIG. 7 obtains the result of the hard decision using the equation (4). On the other hand, the present invention exploits the fact that the TPC always consists of two bits if any one of the first to fourth DPCCH slot formats is adopted, in order to improve the precision of the hard decision, thereby improving the precision of the channel estimation (see TPC 8 and 9 in FIG. 11). In other words, the TPC bits after the synchronous detection are directly subjected to the hard decision according to the conventional technology, whereas the TPC bits after the synchronous detection are subjected to the hard decision after they are synthesized according to the present invention. Hence, the precision of the channel estimation is improved according to the present invention as compared to the conventional technology.

The result of the hard decision according to present invention is represented by the equations as follows:

$$D_{CCH}(m, 8) = \quad j \quad if \ \mathrm{Re}\left[\sum_{n=8}^{9}\sum_{i=0}^{N_s-1}\left(z_C(i, m, n)\cdot h^*(m, n)\right)\right] \geq 0$$

$$= -j \quad if \ \mathrm{Re}\left[\sum_{n=8}^{9}\sum_{i=0}^{N_s-1}\left(z_C(i, m, n)\cdot h^*(m, n)\right)\right] < 0$$

$$(7),$$

and

$$D_{CCH}(m, 9) = D_{CCH}(m, 8) \tag{8}$$

Comparison of the result of the hard decision $D_{CCH}(m,8)$ and $D_{CCH}(m, 9)$ represented by the equations (7) and (8) with the result of the hard decision DCCH(m, n) represented by the equation (4) reveals that the equations (7) and (8) are different from the equation (4) in that the summations of Zc(i, m, n)· h*(m, n) are summed about n 8 and 9. Here, n represent the number of a bit. Therefore, the equations (7) and (8) represent that the TPC are subjected to the hard decision after being synthesized.

The channel estimator according to the present invention operates in the manner as described above. However, as understood from FIG. 9, the operation of the channel estimator is equivalent to another operation in which (1) the pilot bits are demodulated by the multiplier 32 using the known data $D^*_{PLT}(m, n)$; the demodulated pilot bits are vectorially averaged for every slot in the slot averaging circuit 76; and the vector averages are filtered together to obtain a first result representing a fading vector estimation; (2) the received bits other than the pilot bits are subjected to the synchronous detection using the result (the output of the slot averaging circuit 33) of channel estimation relating to the pilot bits by the multiplier 72; a plurality of TPC bits after the synchronous detection are synthesized in the TPC synthesizer 78, the synthesized TPC bit and the bits of other than the pilot bits and TPC bits after the synchronous detection are subjected to the hard decision in the hard decision circuit 73; the received bits other than the pilot bits are subjected to the despreading using the result $D^*_{CCH}(m, n)$ of the hard decision by the multiplier 75; the despread values are vectorially averaged for every slot in the slot averaging circuit 76; and the vector averages are filtered together to obtain a second result representing the fading vector estimation; and (3) summing the first and second results by the multiplexer 79 in order to obtain the average thereof, finally realizing the channel estimation.

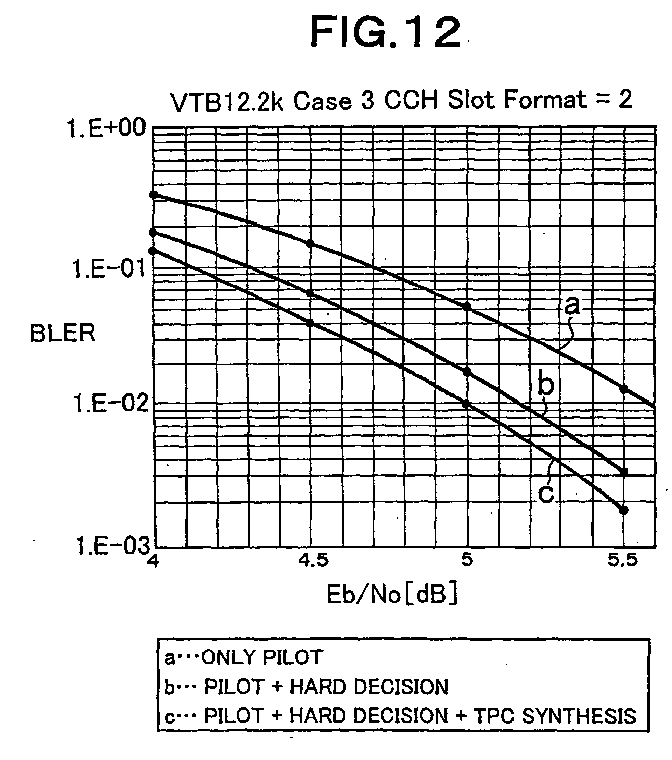

FIG. 12 shows characteristic curves of BLER (Block Error Rate) in Case 3 propagation condition of the 3GPP test channel 12.2kbps model. FIG. 12 shows how the improvement of the precision of the channel estimation results in the improvement of the BLER characteristics at reception side. It is apparent from FIG. 12, the addition of only the hard decision yields an improvement of Eb/No by 0.4dB for the BLER of $10^{-2}$ as compared with the channel estimation using only the pilot bits, and the addition of both the hard decision and the TPC synthesis yields an improvement of Eb/No by 0.15dB for the BLER of $10^{-2}$ as compared with the addition of the conventional hard decision.

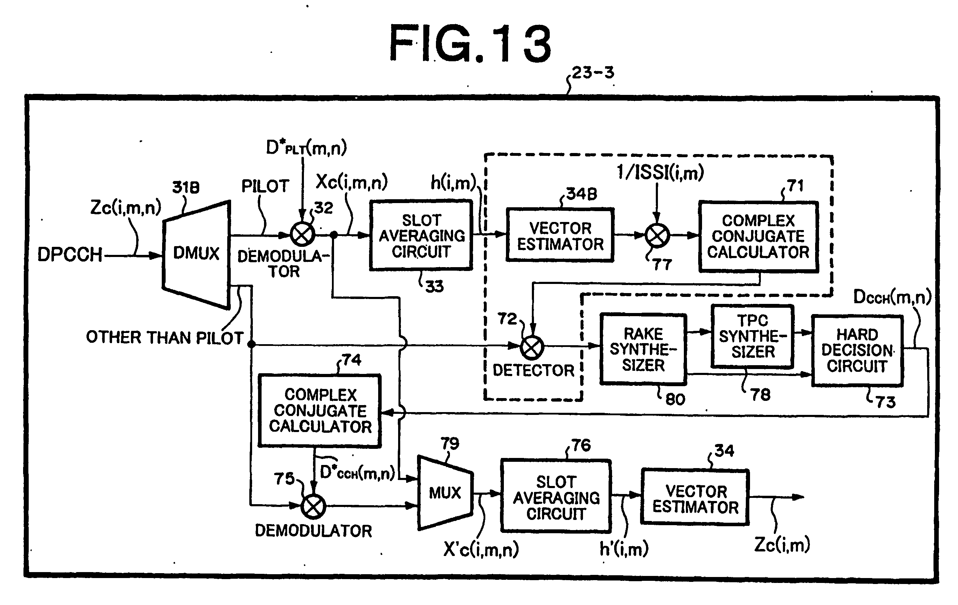

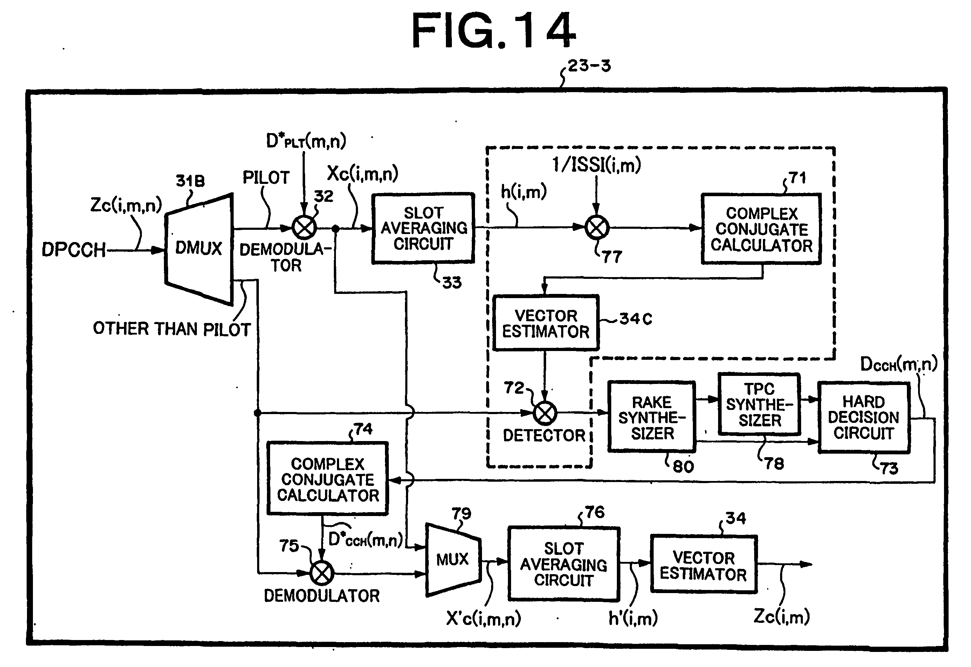

Next, another example of the present invention will be described. In the example as shown in FIG. 9, there is not a vector estimator in a portion for the channel estimation using the pilot bits in order to reduce the amount of the process. However, a vector estimator may be provided for the channel estimation using the pilot bits as shown in FIG. 13 in which a vector estimator 34B is inserted between the slot averaging circuit 33 and the multiplier 77 and in FIG. 14 in which a vector estimator 34C is inserted between the complex conjugate calculator 71 and the multiplier 72.

As explained above, the present invention relates to an improvement of the characteristics in the case where a base station receives a signal on up-link from a mobile terminal. Therefore, the receiver including the channel estimator 23 as shown in FIG. 3 is accommodated in a base station. On the other hand, the transmitter or the modulator as shown in FIG. 2 is accommodated in a mobile terminal.

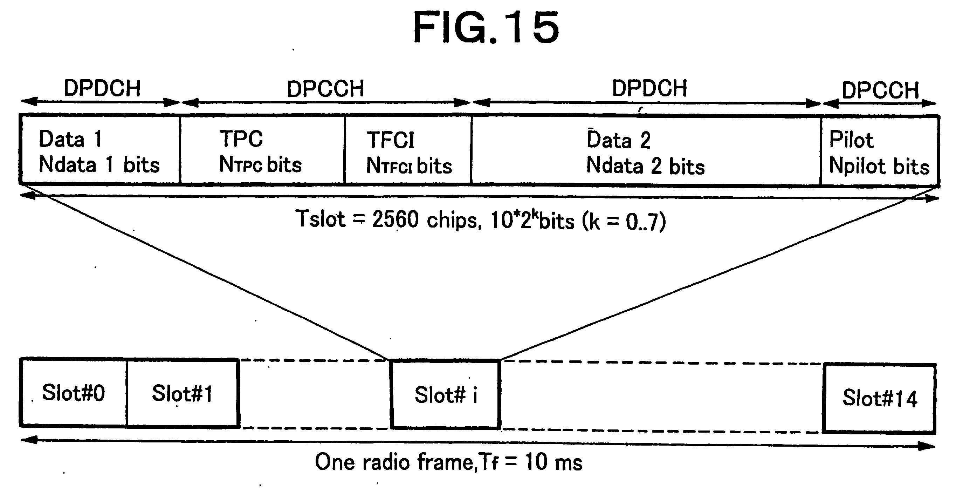

Next, an application of the present invention to a mobile terminal will be described. FIG. 15 shows the format of a signal which is transmitted from a base station to a mobile terminal. This format is shown in FIG. 4 of 3GPP TS25-211 Chapter 5.3.2.

As shown in FIG. 15, in the down-link, the DPDCH and the DPCCH are time-multiplexed and they are referred to as a DPCH (Dedicated Physical Channel) as a whole, which is different from the case of the up-link. In addition, in the down-link, a pilot channel referred to as a CPICH (Common Pilot Channel) is separately transmitted by code-multiplication, and the channel estimation is normally performed using only the pilot bits of this channel. Further, if the channel estimation is performed using both the pilot bits of the CPICH and the pilot bits of the DPCH, then the characteristics of the channel estimation is improved.

A technology in which a mobile terminal which receives the CPICH and the DPCH performs the channel estimation will be described. The description above was made on the assumption that the channel estimator 23-3 as shown in FIG. 9 is accommodated in a base station. However, the channel estimator 23-3 is possible to be accommodated in a mobile terminal. In order to accommodate the channel estimator 23-3 in a mobile terminal, it is only needed that the DPCCH as an input to the demultiplexer 31B is changed to the CPICH and DPCH, the pilot bits as an output from the demultiplexer 31B is changed to the pilot bits of the CPICH and DPCH, the portion other than than the pilot bits as an output from the demultiplexer 31B is changed to the TPC, TFCI and BFI of the DPCH.

**Claims**

**1.** A CDMA receiver comprising:

a plurality of channel estimators (23-3) each for performing channel estimation;
a rake synthesizer (80) connected to said plurality of channel estimators; and
a hard decision circuit (73) which is connected to said rake synthesizer and said plurality of said channel estimators and which performs a hard decision,

wherein each of said plurality of channel estimators (23-3) comprises:

a first channel estimator unit (81) for performing a first channel estimation using pilot bits; and
a synchronous detector (72) for detecting received bits other than said pilot bits,

wherein said rake synthesizer (80) performs rake synthesis on results of the detections by synchronous detectors (72) each of which is provided in said channel estimator (23-3), and
wherein each of said plurality of channel estimator (23-3) further comprises:

a second channel estimator unit (82) for performing a second channel estimation using a result of said hard decision; and
an averaging circuit (83) for averaging a result of said first channel estimation and a result of said second channel estimation,

   ***characterized in that***
the CDMA receiver further comprises a transmission power control bit synthesizer (78) which is inserted between said rake synthesizer (80) and said hard decision circuit (73) and which synthesizes transmission power control bits supplied from said rake synthesizer (80), and
said hard decision circuit (73) makes said hard decision on at least a synthesized transmission power control bit.

2. The CDMA receiver as set forth in claim 1,
wherein said hard decision circuit (73) makes a decision on both said synthesized transmission power control bit and bits other than both said pilot bits and said transmission power control bits.

3. The CDMA receiver as set forth in claim 1,
wherein said synchronous detector (72) detects said received bits using a result of said first channel estimation.

4. A CDMA base station comprising the CDMA receiver as set forth in any one of claims 1 to 3.

5. A CDMA mobile terminal comprising the CDMA receiver as set forth in any one of claims 1 to 3.

6. A method for channel estimation comprising the steps of:

performing a first channel estimation (S1) using pilot bits in each finger;
performing a synchronous detection (S2) on received bits other than said pilot bits in each finger;
performing rake synthesis (S2) on results of the synchronous detections, each of which have performed in each finger;
making a hard decision (S3);
performing a second channel estimation (S4) using a result of said hard decision in each finger; and
averaging (S4) a result of said first channel estimation and a result of said second channel estimation in each finger,

   ***characterized in that***
the method further comprises the step of synthesizing (S3) transmission power control bits which have been rake synthesized, and
the step of making a hard decision (S3) makes a hard decision on at least a synthesized transmission power control bit.

7. The method for channel estimation as set forth in claim 6,
said hard decision (S3) is made on both said synthesized transmission power control bit and bits other than both said pilot bits and said transmission power control bits.

8. The method for channel estimation as set forth in claim 6,
said synchronous detection (S2) is performed using a result of said first channel estimation.

**Patentansprüche**

1. CDMA-Empfänger mit:

    einer Anzahl von Kanalschätzern (23 - 3), jeweils zur Durchführung einer Kanalabschätzung,
    einem Rakelsynthetesierer (80), der mit der Anzahl von Kanalschätzern verbunden ist, und
    einer Hartentscheidungsschaltung (73), die mit dem Rakelsynthetisierer und deren Anzahl von Kanalabschätzern verbunden ist und die eine harte Entscheidung trifft,

    wobei jeder der Anzahl von Kanalschätzern (23 - 3) aufweist:

    einer erste Kanalschätzeinheit (81) zum Durchführen einer ersten Kanalabschätzung unter Verwendung von
    Pilotbits und
    einen Synchrondetektor (72) zur Erfassung von anderen empfangenen Bits als den Pilotbits,

    wobei der Rakelsynthetisierer (80) eine Rakelsynthese an Ergebnissen der Erfassungen durch die Synchrondetektoren (72) durchführt, wobei jedes in dem Kanalabschätzern (23 - 3) geliefert wird,
    wobei jeder der Anzahl von Kanalschätzern (23 - 3) ferner aufweist:

    eine zweite Kanalschätzeinheit (82) zur Durchführung einer Kanalabschätzung unter Verwendung eines Ergebnisses der harten Entscheidung, und
    eine Mittelungsscheidung (83) zum Mitteln eines Ergebnisses der ersten Kanalabschätzung und eines Ergebnisses der zweiten Kanalabschätzung, **dadurch gekennzeichnet, dass**
    der CDMA-Empfänger ferner einen Sendeleistungssteuerbitsynthetisierer (78) aufweist, der zwischen den
    Rakesynthetisierer (80) und die Hartentscheidungsschaltung (73) eingefügt ist und die Sendeleistungssteuerbits, die von dem Rakesynthetisierer (80) geliefert werden, synthetisiert, und wobei die Hartentscheidungsschaltung (73) die harte Entscheidung aufgrund zumindest eines synthetisierten Sendeleistungssteuerbits
    durchführt.

2. CDMA-Empfänger nach Anspruch 1,
    wobei die Hartentscheidungsschaltung (73) eine Entscheidung für sowohl das synthetisierte Sendeleistungssteuerbit und andere Bits als die Pilotbits und die Sendeleistungssteuerbits trifft.

3. CDMA-Empfänger nach Anspruch 1,
    wobei der Synchrondetektor (72) die empfangenen Bits unter Verwendung eines Ergebnisses der ersten
    Kanalabschätzung erfasst.

4. CDMA-Basisstation mit einem CDMA-Empfänger nach einem der Ansprüche 1 bis 3.

5. CDMA-Mobilanschluss mit dem CDMA-Empfänger nach einem der Ansprüche 1 bis 3.

6. Verfahren der Kanalabschätzung mit den Schritten:

    Durchführen einer ersten Kanalabschätzung (S1) unter Verwendung von Pilotbits in jedem Finger,
    Durchführen einer Synchrondetektion (S2) an anderen Bits als den Pilotbits in jedem Finger,
    Durchführen einer Rakesynthese (S2) an den Ergebnissen der Synchrondetektion, wobei jede in jedem Finger
    durchgeführt wurde,
    Treffen einer Hartentscheidung (S3),
    Durchführung einer zweiten Kanalabschätzung (S4) unter Verwendung des Ergebnisses der harten Entscheidung in jedem Finger und
    Mittelung (S4) eines Ergebnisses der ersten Kanalabschätzung und eines Ergebnisses der zweiten Kanalabschätzung in jedem Finger,

    **dadurch gekennzeichnet, dass**
    das Verfahren ferner den Schritt der Synthetisierung (S3) von Sendeleistungssteuerbits aufweist, die rakesynthetisiert wurden, und
    wobei der Schritt der harten Entscheidung (S3) eine harte Entscheidung an zumindest einem synthetisierten
    Sendeleistungssteuerbit durchführt.

**7.** Verfahren zur Kanalabschätzung nach Anspruch 6,
wobei die harte Entscheidung (S3) an sowohl dem synthetisierten Sendeleistungssteuerbit und anderen Bits als dem Pilotbits und den Sendeleistungssteuerbits durchführt.

**8.** Verfahren zur Kanalabschätzung nach Anspruch 6,
wobei die Synchrondetektion (S2) unter Verwendung eines Ergebnisses der ersten Kanalabschätzung durchgeführt wird.

**Revendications**

**1.** Récepteur AMRC (accès multiple par répartition en code) comprenant :

une pluralité de dispositifs d'évaluation de canal (23-3), chacun pour effectuer une évaluation de canal ;
un synthétiseur en râteau (80) relié à ladite pluralité de dispositifs d'évaluation de canal ; et
un circuit de décision ferme (73) qui est relié audit synthétiseur en râteau et à ladite pluralité de dispositifs d'évaluation de canal et qui effectue une décision ferme,

dans lequel chacun de ladite pluralité de dispositifs d'évaluation de canal (23-3) comprend :

une première unité de dispositif d'évaluation de canal (81) pour effectuer une première évaluation de canal en utilisant des bits pilotes ; et
un détecteur synchrone (72) pour détecter des bits reçus autres que lesdits bits pilotes,

dans lequel ledit synthétiseur en râteau (80) effectue une synthèse en râteau sur les résultats des détections par les détecteurs synchrones (72), chacun étant disposé dans ledit dispositif d'évaluation de canal (23-3), et
dans lequel chacun de ladite pluralité de dispositifs d'évaluation de canal (23-3) comprend de plus :

une seconde unité de dispositif d'évaluation de canal (82) pour effectuer une seconde évaluation de canal en utilisant un résultat de ladite décision ferme ; et
un circuit de calcul de moyenne (83) pour faire la moyenne d'un résultat de ladite première évaluation de canal et d'un résultat de ladite seconde évaluation de canal,

***caractérisé en ce que***
le récepteur AMRC comprend de plus un synthétiseur de bit de commande de puissance de transmission (78) qui est inséré entre ledit synthétiseur en râteau (80) et ledit circuit de décision ferme (73) et qui synthétise des bits de commande de puissance de transmission fournis en provenance dudit synthétiseur en râteau (80), et
ledit circuit de décision ferme (73) prend ladite décision ferme sur au moins un bit de commande de puissance de transmission synthétisé.

**2.** Récepteur AMRC selon la revendication 1,
dans lequel ledit circuit de décision ferme (73) prend une décision à la fois sur ledit bit de commande de puissance de transmission synthétisé et sur des bits autres que lesdits bits pilotes et que lesdits bits de commande de puissance de transmission.

**3.** Récepteur AMRC selon la revendication 1,
dans lequel ledit détecteur synchrone (72) détecte lesdits bits reçus en utilisant un résultat de ladite première évaluation de canal.

**4.** Station de base AMRC comprenant le récepteur AMRC selon l'une quelconque des revendications 1 à 3.

**5.** Terminal mobile AMRC comprenant le récepteur AMRC selon l'une quelconque des revendications 1 à 3.

**6.** Procédé d'évaluation de canal comprenant les étapes consistant à :

effectuer une première évaluation de canal (S1) en utilisant des bits pilotes dans chaque doigt ;
effectuer une détection synchrone (S2) sur les bits reçus autres que lesdits bits pilotes dans chaque doigt ;
effectuer une synthèse en râteau (S2) sur les résultats des détections synchrones, chacune ayant été effectuée

**11**

dans chaque doigt ;
prendre une décision ferme (S3) ;
effectuer une seconde évaluation de canal (S4) en utilisant un résultat de ladite décision ferme dans chaque doigt ; et
faire la moyenne (S4) d'un résultat de ladite première évaluation de canal et d'un résultat de ladite seconde évaluation de canal dans chaque doigt,

**caractérisé en ce que**
le procédé comprend de plus l'étape consistant à synthétiser (S3) des bits de commande de puissance de transmission qui ont subi une synthèse en râteau, et
l'étape de prise d'une décision ferme (S3) prend une décision ferme sur au moins un bit de commande de puissance de transmission synthétisé.

7. Procédé pour l'évaluation de canal selon la revendication 6,
dans lequel ladite décision ferme (S3) est prise à la fois sur ledit bit de commande de puissance de transmission synthétisé et sur des bits autres que lesdits bits pilotes et que lesdits bits de commande de puissance de transmission.

8. Procédé pour l'évaluation de canal selon la revendication 6,
dans lequel ladite détection synchrone (S2) est effectuée en utilisant un résultat de ladite première évaluation de canal.

# FIG.1

### UPLINK SIGNAL FORMAT

DPDCH

| Data N_data bits |
| --- |

DPCCH

| Pilot N_pilot bits | TFCI N_TFCI bits | FBI N_FBI | TPC N_TPC bits |
| --- | --- | --- | --- |

# FIG.2

EP 1 298 814 B1

# FIG.3

RECEIVED BASEBAND SIGNAL

RECEIVER PER ONE USER

SEARCHER — 1

DELAY PROFILE OF PATH

FINGER — 2

21 — SELEC-TOR

22 — DESPREADER

23 — CHANNEL ESTIMATOR

26 — CODE GENERATOR

27 — DELAY CIRCUIT

24 — SYNCHRONOUS DETECTOR/ LEVEL DETECTOR

25 — RAKE SYNTHESIZER/ SIR DETECTOR

TO CODEC

EP 1 298 814 B1

# FIG.4

DPCCH $\xrightarrow{Zc(i,m,n)}$ **PILOT EXTRACTOR** (31) → (DEMODULATOR with $D^*_{PLT}(m,n)$ input, multiplier 32) → $Xc(i,m,n)$ → **SLOT AVERAGING CIRCUIT** (33) → $h(i,m)$ → **VECTOR ESTIMATOR** (34) → $Zc(i,m)$

23-1

EP 1 298 814 B1

# FIG.5

EP 1 298 814 B1

# FIG.6

1/ISSI(i,m)

CHANNEL ESTIMATING VECTOR Zc(i,m) → ⊗ 61 → COMPLEX CONJUGATE CALCULATOR 62 → ⊗ 63

24

RECEIVED DPDCH DATA Xd(i,m−2,n) (WHERE n={1, 2, ⋯ N_data}) → ⊗ 63 → RAKE SYNTHESIZER 64 → DEMODULATED DPDCH DATA $U_{DCH}(m-2,n)$

EP 1 298 814 B1

# FIG.7

23-2

$Z_c(i,m,n)$

DPCCH → DMUX 31B

PILOT

$D^*_{PLT}(m,n)$

⊗ 32

DEMODULATOR

$X_c(i,m,n)$

SLOT AVERAGING CIRCUIT 33

$h(i,m)$  $1/ISSI(i,m)$

⊗ 77

COMPLEX CONJUGATE CALCULATOR 71

72

⊗ DETECTOR

RAKE SYNTHE-SIZER 80

HARD DECISION CIRCUIT 73

$D_{CCH}(m,n)$

OTHER THAN PILOT

COMPLEX CONJUGATE CALCULATOR 74

75 ⊗ DEMODULATOR

$D^*_{CCH}(m,n)$

MUX 79

$X'_c(i,m,n)$

SLOT AVERAGING CIRCUIT 76

$h'(i,m)$

VECTOR ESTIMATOR 34

$Z_c(i,m)$

EP 1 298 814 B1

FIG.8

EP 1 298 814 B1

FIG.9

EP 1 298 814 B1

20

# FIG.10

START

S1

PERFORM CHANNEL ESTIMATION
USING ONLY PILOT BITS

S2

PERFORM SYNCHRONOUS DETECTION
AND RAKE SYNTHESIS ON BITS OTHER
THAN PILOT BITS USING CHANNEL
ESTIMATION OBTAINED IN STEP S1

S3

PERFORM TPC SYNTHESIS AND
THEREAFTER MAKE HARD DECISION

S4

PERFORM CHANNEL ESTIMATION
USING BITS OTHER THAN PILOT
BITS AND AVERAGE TWO CHANNEL
ESTIMATION RESULTS

S5

PERFORM SYNCHRONOUS
DETECTION ON DPDCH USING
THE RESULT OF STEP S4

END

# FIG.11

DPCCH Slot Format = 2

| PILOT | | | | | TFCI | | FBI | TPC | |
|---|---|---|---|---|---|---|---|---|---|
| 0 | 1 | 2 | 3 | 4 | 5 | 6 | 7 | 8 | 9 |

SYNCHRONOUS DETECTION

$\oplus$

HARD DECISION

$D_{CCH}(m,6)$

$D_{CCH}(m,8)$

$D_{CCH}(m,5)$

$D_{CCH}(m,7)$

EP 1 298 814 B1

EP 1 298 814 B1

# FIG.12

VTB12.2k Case 3 CCH Slot Format = 2

a···ONLY PILOT
b··· PILOT + HARD DECISION
c··· PILOT + HARD DECISION + TPC SYNTHESIS

23

# FIG.13

EP 1 298 814 B1

# FIG.14

EP 1 298 814 B1

# FIG.15

| DPDCH | DPCCH | | DPDCH | DPCCH |
|---|---|---|---|---|
| Data 1<br>Ndata 1 bits | TPC<br>$N_{TPC}$ bits | TFCI<br>$N_{TFCI}$ bits | Data 2<br>Ndata 2 bits | Pilot<br>Npilot bits |

$T_{slot} = 2560$ chips, $10*2^k$ bits (k = 0..7)

| Slot#0 | Slot#1 | | Slot# i | | Slot#14 |
|---|---|---|---|---|---|

One radio frame, $T_f = 10$ ms

EP 1 298 814 B1